## Europäisches Patentamt
## European Patent Office
## Office européen des brevets

(19)

(11) Veröffentlichungsnummer: **0 004 933**
**B1**

(12)

# EUROPÄISCHE PATENTSCHRIFT

(45) Veröffentlichungstag der Patentschrift:
**14.10.81**

(51) Int. Cl.³: **A 22 C 17/02**, A 22 B 5/20

(21) Anmeldenummer: **79101101.8**

(22) Anmeldetag: **10.04.79**

(54) **Bandsägegerät zum Zerteilen von Fleisch und Knochen.**

(30) Priorität: **26.04.78 DE 2818147**

(43) Veröffentlichungstag der Anmeldung:
**31.10.79 Patentblatt 79/22**

(45) Bekanntmachung des Hinweises auf die Patenterteilung:
**14.10.81 Patentblatt 81/41**

(84) Benannte Vertragsstaaten:
**BE CH FR GB IT LU NL SE**

(56) Entgegenhaltungen:
**DE-B-2 625 096**
**DE-C-932 650**
**FR-A-2 084 272**
**GB-A-1 209 457**
**US-A-2 273 715**
**US-A-2 722 254**
**US-A-2 786 497**
**US-A-2 850 055**
**US-A-3 009 492**

(73) Patentinhaber: **Maschinenfabrik Dornhan GmbH & Co.,**
**D-7242 Dornhan 1 (DE)**

(72) Erfinder: **Grözinger, Horst Herbert,**
**D-7242 Dornhan 1 (DE)**
Erfinder: **Schadow, Hans-Peter, D-7238 Oberndorf Neckar (DE)**

(74) Vertreter: **Westphal, Klaus, Dipl.-Ing. et al,**
**Seb.-Kneipp-Strasse 14, D-7730 Villingen (DE)**

BUNDESDRUCKEREI BERLIN

## Bandsägegerät zum Zerteilen von Fleisch und Knochen

Die Erfindung betrifft ein Bandsägegerät zum scheibenweisen Zerteilen von Fleisch und Knochen, mit einem festen Auflagetisch, durch den das Sägeband hindurchgeführt ist, einer parallel zum Sägeband angeordneten Portionierplatte, einer der Portionierplatte bezüglich des Sägebandes gegenüberliegenden, im wesentlichen zu dieser parallelen Halteplatte, wobei der Abstand von Portionierplatte und Halteplatte vom Sägeband jeweils einstellbar und die Halteplatte vom Auflagetisch abklappbar ist, und mit einer parallel zu Portionierplatte und Halteplatte bezüglich des Sägebandes einstellbaren Andrückeinrichtung.

Da die Halteplatte häufig beim Auflegen von großen Fleischstücken auf den Auflagetisch im Weg ist, ist diese bei bekannten Geräten dieser Art entweder nach oben, wie bei dem Gerät nach der DE-AS 26 25 096, oder zur Seite parallel zu sich selbst abklappbar. In der abgeklappten Stellung ist die Halteplatte nicht benützbar und trägt in keiner Weise zur Führung und Stützung des Schneidgutes bei.

Wenn besonders große Fleischstücke auf den Auflegetisch gelegt werden, kommt es jedoch häufig vor, daß sie über den äußeren Rand desselben hinausragen. Eine sichere Führung von Hand ist in diesem Fall nur schwer zu erreichen, da einerseits das Fleischstück gegen das Sägeband gedrückt und andererseits verhindert werden muß, daß es durch die andrückende Hand um die Kante des Auflagetisches nach unten gekippt wird.

Durch die Erfindung soll ein Gerät der eingangs genannten Art so verbessert werden, daß auch bei sehr großen Fleischstücken eine durchgehend feste Auflage und Führung während des Betriebes gewährleistet ist.

Diese Aufgabe wird erfindungsgemäß dadurch gelöst, daß die Halteplatte mit einer Führungsstange fest verbunden ist, die sich senkrecht zur Fläche der Halteplatte erstreckt und in einem Führungslager längsverschiebbar gelagert ist, und daß das Führungslager an einem Schwenkhebel sitzt, der um eine unterhalb des Auflagetisches parallel zur Halteplatte verlaufende Schwenkachse samt Führungsstange und Halteplatte derart in eine Anschlagstellung verschwenkbar ist, daß die in eine am Führungslager anliegende Stellung zurückgezogene Halteplatte mit dem Auflagetisch fluchtend an diesen anschließt.

Wenn daher die Halteplatte abgeschwenkt wird, um dem Auflegen eines großen Fleischstückes nicht im Wege zu sein, wird sie nicht für den weiteren Betrieb unbrauchbar, sondern verlängert unmittelbar den Auflagetisch, so daß auch größere Fleischstücke voll aufliegen und von einer Hand ohne Gefahr des Abkippens vorgeschoben werden können. Sobald die Zerteilung des Fleischstückes so weit fortgeschritten ist, daß sein hinterer Rand die abgeklappte Halteplatte verläßt, kann der Schwenkhebel mit Führungslager, Führungsstange und Halteplatte wieder in die normale Stellung heraufgeklappt werden und die Halteplatte kann in üblicher Weise an der Rückseite des Fleischstückes zur Anlage gebracht werden. Durch Verschieben der Führungsstange im Führungslager kann die Halteplatte sodann bis zum Ende des Zerteilungsvorganges dem Fleischstück in Richtung zum Sägeband hin nachgeführt werden.

In zweckmäßiger Ausgestaltung der Erfindung trägt die Führungsstange auf der der Halteplatte gegenüberliegenden Seite des Führungslagers einen Betätigungsknopf, der einerseits ein Verschieben und Zurückziehen der Halteplatte gestattet und andererseits verhindert, daß das Ende der Führungsstange durch das Führungslager gleiten kann. Somit stellt er einen Endanschlag für den Vorschub der Halteplatte in Richtung Sägeband dar.

Vorzugsweise ist die Führungsstange im Führungslager frei verschiebbar gelagert, so daß nach dem Abklappen des Schwenkhebels die nunmehr vertikal stehende Führungsstange durch ihr Eigengewicht und das Gewicht der Halteplatte nach unten fällt, bis die Halteplatte am Führungslager anliegt. In dieser Stellung fluchtet sie mit dem Auflagetisch und schließt sich an diesen an. Zum Zurückklappen der Halteplatte in die aufrechte Stellung kann unmittelbar an dieser in an sich bekannter Weise ein weiterer Handgriff befestigt sein. Derselbe kann auch zum Andrücken der Halteplatte von Hand an der Rückseite des zu verarbeitenden Fleischstückes verwendet werden.

Anhand der Figuren wird ein Ausführungsbeispiel der Erfindung näher erläutert. Es zeigt

Fig. 1 eine Vorderansicht des erfindungsgemäßen Gerätes; und

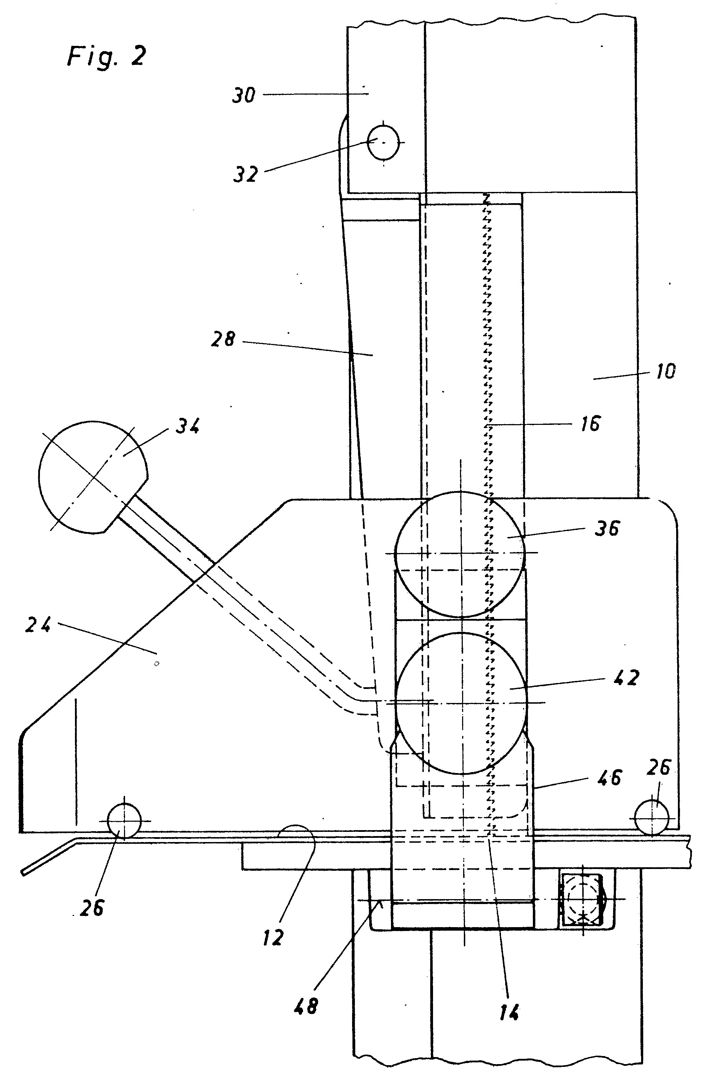

Fig. 2 eine bezüglich Fig. 1 um 90° verdrehte Seitenansicht des Geräts, betrachtet gemäß Fig. 1 von rechts.

Das dargestellte Bandsägegerät weist ein allgemein C-förmiges Gehäuse 10 auf, an dessen unterem Schenkel der Auflagetisch 12 befestigt ist. Durch einen Schlitz 14 des Auflagetisches ist das vertikal verlaufende Sägeband 16 hindurchgeführt. Eine Portionierplatte 18 liegt mittels Gleitfüßen 20 auf dem Auflagetisch 12 auf und kann mit Hilfe einer Portionierstange 22 in wählbarem Abstand vom Sägeband 16 eingestellt und in nicht näher gezeigter Weise in der eingestellten Lage festgelegt werden.

Der Portionierplatte 18 bezüglich des Sägebandes 16 gegenüber und zur Portionierplatte 18 parallel ist eine Halteplatte 24 angeordnet, die ebenfalls mit Hilfe von Gleitfüßen 26 auf dem Auflagetisch 12 aufliegt. Portionierplatte 18 und Halteplatte 24 sind parallel zum Sägeband 16 angeordnet.

Zwischen Portionierplatte 18 und Halteplatte 24 ist eine Andrückeinrichtung 28 angeordnet, die um eine im oberen Schenkel 30 des Gehäuses 10 gelegene Schwenkachse 32 verschwenkbar ist. Sie kann mittels eines Handgriffs 34 vom Sägeband 16 weg oder zu diesem hin geschwenkt werden.

Die Halteplatte 24 weist zu ihrer Betätigung einen schräg nach oben stehenden Handgriff 36 auf. Sie ist ferner mit einer senkrecht zu ihrer Fläche verlaufenden Führungsstange 38 starr verbunden, die in einem Führungslager 40 gleitend gelagert ist. Das der Halteplatte 24 entgegengesetzte Ende der Führungsstange trägt einen Betätigungsknopf 42, der gleichzeitig einen Anschlag zur Festlegung der dem Sägeband 16 am nächsten gelegenen Stellung der Halteplatte 24 bildet. Durch Hin- und Herschieben der Führungsstange 38 im Führungslager 40 läßt sich die Halteplatte 24 gemäß dem Doppelpfeil 44 zwischen der durch Anliegen des Betätigungsknopfes 42 am Führungslager 40 festgelegten vordersten Stellung und einer durch Anliegen der Halteplatte 24 am Führungslager 40 festgelegten hintersten Stellung verschieben.

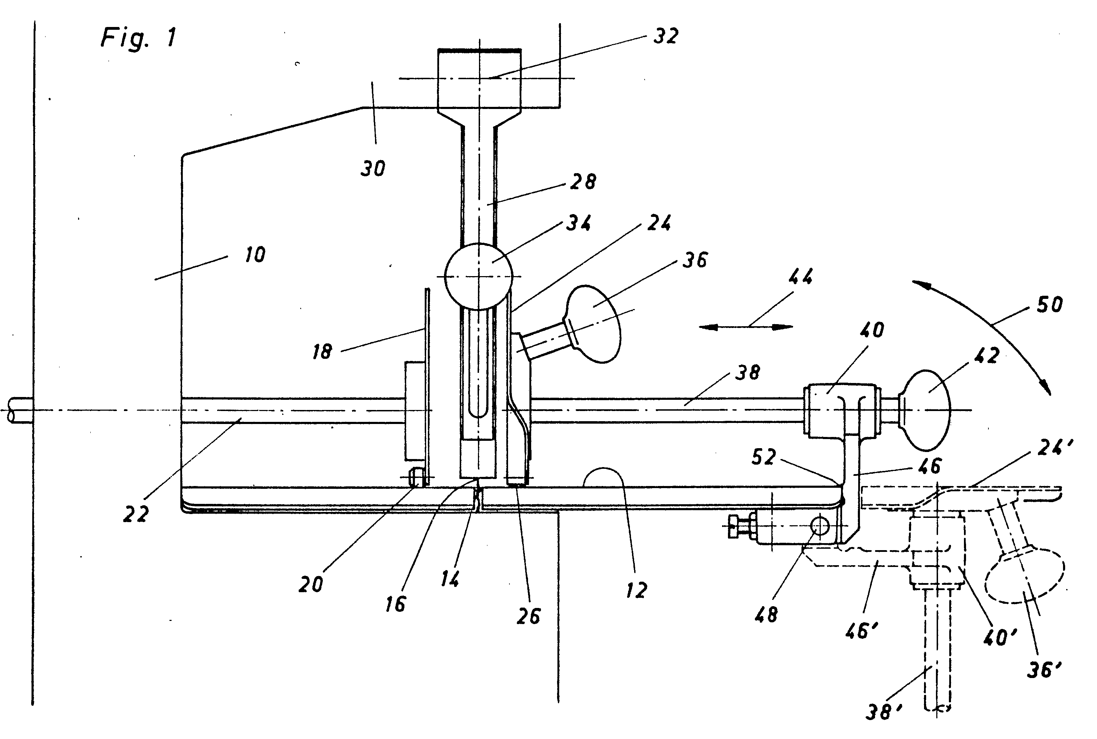

Das Führungslager 40 sitzt an einem Schwenkhebel 46, der um eine an der Unterseite des Auflagetisches 12 gelegene, parallel zur Halteplatte 24 verlaufende Schwenkachse 48 um 90° gemäß dem Doppelpfeil 50 in die in Fig. 1 in gestrichelten Linien dargestellte Anschlagsstellung 46' verschwenkbar ist. Wenn sich der Schwenkhebel 46 in der verschwenkten Stellung 46' befindet, befindet sich gleichzeitig das Führungslager in der ebenfalls gestrichelt gezeichneten Stellung 40'. Wenn sich die Halteplatte 24 in der verschwenkten Stellung nicht bereits in Anlage am Führungslager 40 befindet, fällt die Führungsstange 38 und die Halteplatte 24 durch Schwerkraft in die in Fig. 1 in gestrichelten Linien gezeichneten Stellungen 38' und 24', wobei sich der Handgriff 36 in der gestrichelten Stellung 36' befindet.

In der abgeklappten Stellung 24' fluchtet die Halteplatte mit dem Auflagetisch 12 und setzt diesen nach rückwärts fort, so daß sie einerseits größeren Fleischstücken nicht im Wege ist und andererseits dieselben über den rückwärtigen Rand 52 des Auflagetisches 12 hinaus unterstützt. Sobald die Zerteilung eines auf der Halteplatte in der Stellung 24' aufliegenden Fleischstückes so weit fortgeschritten ist, daß der ·rückwärtige Rand die Halteplatte verläßt, kann diese mittels des Handgriffs 36' wieder nach oben in die aufrechte Stellung geklappt und an die Rückseite des Fleischstückes angedrückt werden.

**Patentansprüche**

1. Bandsägegerät zum scheibenweisen Zerteilen von Fleisch und Knochen, mit einem festen Auflagetisch (12), durch den das Sägeband (16) hindurchgeführt ist, einer parallel zum Sägeband (16) angeordneten Portionierplatte (18), einer der Portionierplatte (18) bezüglich des Sägebandes (16) gegenüberliegenden, im wesentlichen zu dieser parallelen Halteplatte (24), wobei der Abstand von Portionierplatte (18) und Halteplatte (24) vom Sägeband (16) jeweils einstellbar und die Halteplatte (24) vom Auflagetisch (12) abklappbar ist, und mit einer parallel zu Portionierplatte (18) und Halteplatte (24) bezüglich des Sägebandes (16) verstellbaren Andrückeinrichtung (28), dadurch gekennzeichnet, daß die Halteplatte (24) mit einer Führungsstange (38) fest verbunden ist, die sich senkrecht zur Fläche der Halteplatte (24) erstreckt und in einem Führungslager (40) längsverschiebbar gelagert ist, und daß das Führungslager (40) an einem Schwenkhebel (46) sitzt, der um eine unterhalb des Auflagetisches (12) parallel zur Halteplatte (24) verlaufende Schwenkachse (48) samt Führungsstange (38) und Halteplatte (24) derart in eine Anschlagstellung verschwenkbar ist, daß die in eine am Führungslager (40) anliegende Stellung zurückgezogene Halteplatte (24) mit dem Auflagetisch (12) fluchtend an diesen anschließt.

2. Gerät nach Anspruch 1, dadurch gekennzeichnet, daß die Führungsstange (38) auf der der Halteplatte (24) gegenüberliegenden Seite des Führungslagers (40) einen Betätigungsknopf (42) trägt.

**Claims**

1. Band saw equipment for dividing meat and bones in slices, with a fixed supporting table (12) through which the saw band (16) is guided, with a portioning plate (18) located parallel to the saw band (16), with a retaining plate (24) located opposite the portioning plate (18) in respect of the saw band (16) and essentially parallel to said plate, wherein the distance from the portioning plate (18) and retaining plate (24) to the saw band (16) can be adjusted respectively and the retaining plate (24) can be swung down from the supporting table (12), and with a pressing device (28) adjustable parallel to the portioning plate (18) and retaining plate (24) in respect of the saw band (16), characterised in that the retaining plate (24) is connected fixedly to a guide rod (38) which extends perpendicularly to the face of the retaining plate (24) and which is mounted longitudinally displaceably in a guide bearing (40), and in that the guide bearing (40) rests on a pivoting lever (46) which can be pivoted, together with the guide rod (38) and retaining plate (24), about a pivot axis (48) extending underneath the supporting table (12) parallel to the retaining plate (24), into a stop position, in such a way that the retaining plate (24) withdrawn into a position lying against the guide bearing (40) is aligned with the supporting table (12) and adjoins the latter.

2. Equipment according to Claim 1, characterised in that the guide rod (38) carries an actuating knob (42) on the side of the guide bearing (40) lying opposite the retaining plate (24).

## Revendications

1. Scie à ruban destinée à découper en tranches de la viande et des os, comportant un plateau d'appui (12) fixe que traverse la lame de scie (16), un plateau (24) de fixation ou de maintien, placé à l'opposé du plateau (18) de préparation des portions par rapport à la lame de scie (16) et essentiellement parallèle à lui, la distance qui sépare le plateau (18) de préparation des portions et le plateau (24) de fixation de la lame de scie (16) étant réglable dans les deux cas, et le plateau de fixation (24) pouvant être retiré du plateau d'appui (12), et comportant enfin un dispositif de serrage (28), réglable par rapport à la lame de scie (16), parallèle au plateau de préparation des portions (18) et au plateau de fixation (24), scie à ruban caractérisée en ce que le plateau de fixation (24) est relié rigidement avec une tige (38) de guidage, qui s'étend perpendiculairement à la surface de ce plateau (24) et qui est montée mobile longitudinalement dans un palier de guidage (40), et que ce palier de guidage (40) est posé sur un levier tournant (46), que l'on peut faire tourner dans une position de butée, sur un axe de rotation (48) qui s'étend en dessous du plateau d'appui (12) parallèlement au plateau de fixation (24), en commun avec la tige de guidage (38) et le plateau de fixation (24), de façon telle que le plateau de fixation (24) ramené en arrière dans une position où il s'applique sur le palier de guidage (40) se raccords avec le plateau d'appui (12) en s'alignant avec lui.

2. Scie à ruban suivant la revendication 1, caractérisée en ce que la tige de guidage (38) porte, sur le côté du plaier de guidage (40) qui est à l'opposé du plateau de fixation (24), une poignée de manoeuvre (42).

Fig. 1

Fig. 2

0 004 933